# EUROPEAN PATENT SPECIFICATION

(11) **EP 4 485 245 B1**
(45) Date of publication and mention of the grant of the patent: **08.04.2026**
(21) Application number: 24160245.7
(22) Date of filing: 28.02.2024
(51) Int. Cl.: G06F 21/55

(54) **INCIDENT EVENT CAUSE IDENTIFICATION SYSTEM AND INCIDENT EVENT CAUSE IDENTIFICATION METHOD**
SYSTEM ZUR IDENTIFIZIERUNG DER URSACHE EINES UNFALLEREIGNISSES UND VERFAHREN ZUR IDENTIFIZIERUNG DER URSACHE EINES UNFALLEREIGNISSES
SYSTÈME D'IDENTIFICATION DE CAUSE D'ÉVÉNEMENT INCIDENT ET PROCÉDÉ D'IDENTIFICATION DE CAUSE D'ÉVÉNEMENT INCIDENT

(30) Priority: 27.06.2023 JP 2023104791
(43) Date of publication of application: 01.01.2025
(73) Proprietor: Hitachi, Ltd., Tokyo 100-8280 (JP)
(72) Inventor: SATO, Chinatsu, Tokyo 100-8280 (JP); IDEGUCHI, Kota, Tokyo 100-8280 (JP); HIGAKI, Hiroyuki, Tokyo 100-8280 (JP); KAI, Satoshi, Tokyo 100-8280 (JP); ISOBE, Yoshiaki, Tokyo 100-8280 (JP)
(74) Representative: MERH-IP Matias Erny Reichl Hoffmann Patentanwälte PartG mbB

(56) References cited:
- US-A1- 2021 044 607
- US-A1- 2023 102 786
- JIN ZHUOCHEN ET AL: "Visual Causality Analysis of Event Sequence Data", IEEE TRANSACTIONS ON VISUALIZATION AND COMPUTER GRAPHICS, IEEE, USA, vol. 27, no. 2, 13 October 2020 (2020-10-13), pages 1343 - 1352, XP011834532, ISSN: 1077-2626, [retrieved on 20210128], DOI: 10.1109/TVCG.2020.3030465
- OLA AHMAD ET AL: "Causal Analysis for Robust Interpretability of Neural Networks", ARXIV.ORG, CORNELL UNIVERSITY LIBRARY, 201 OLIN LIBRARY CORNELL UNIVERSITY ITHACA, NY 14853, 20 June 2023 (2023-06-20), XP091541166

## Description

### BACKGROUND

### Technical Field

The present invention relates to an incident event cause identification system and an incident event cause identification method.

### Related Art

In recent years, cyberattacks on various control systems frequently occur, and it is crucial to accurately determine whether an incident detected in a control system is due to a cyberattack or simply a failure of the system itself.

That is, in a security operation center (SOC) monitoring incidents in the control systems, when an incident is detected, it is necessary to determine whether the detected incident is cyber-related or caused by a mechanical failure, and appropriately escalate the incident to the relevant department and take necessary actions. In particular, in order to prevent the spread of the damage or influence caused by the cyberattack, it is important to correctly determine the cause of the incident first.

Patent Literature 1 describes a technique of storing one or more attack patterns that are types obtained by classifying a group of alerts anticipated to occur when an industrial control system is subjected to a cyberattack into sequences based on a temporal stage of the cyberattack and sequences based on a spatial stage of an asset attacked by the cyberattack, and diagnosing the presence or absence of a cyberattack on the industrial control system on the basis of consistency between the group of alerts and the attack patterns.

In addition, in PTL 2, a method for determining causal associations between events is disclosed that aims to identify a cause for a given event by determining causal probabilities between existing events indicating both, a direction and a score that an event is caused by another event.

Furthermore, in NPTL 1, equally a system capable of conducting causal analysis is described, wherein the mechanism applied in NPTL 1 focusses on generating causal network based on an early Hawkes process modeling paired with a subsequent user-feedback mechanism.

Moreover, in PTL 3, a detection mechanism for detecting a thread within a multi-event system is stipulated which determines the emergence of a given threat by means of pre-defined sequence listings associated to a given threat. Specifically, for each threat possibly occurring in the system, a predefined sequence of alerts may be stored in the system while the system may check each of these sequences by acquiring appropriate log information and thereinafter determine the occurrence of the threat by identifying a sequence previously happened.

### Citation List

### Patent Literature

Patent Literature 1: JP 2022-86181 A
Patent Literature 2: US 2023/102786 A1
Patent Literature 3: US 2021/044607 A1

### Non-Patent Literature

Non-Patent Literature 1: JIN ZHUOCHEN ET AL.: "Visual Causality Analysis of Event Sequence Data", IEEE Transactions on Visualization and Computer Graphics, vol. 27(2), (2020)

### SUMMARY

According to the technique disclosed in Patent Literature 1, it is possible to determine whether an alert is an attack or a failure as a chain relationship of alerts is defined as an attack pattern or a failure pattern in advance.

However, in actual systems, among pieces of information that can be output from system-related devices, information serving as a monitoring target of alert monitoring is often limited. That is, not only systems with many types of alerts but also systems with no sufficient number of types of alerts from which a chain relationship can be created in advance are included in actual systems.

In addition, logs of unmonitored devices are hardly utilized for analysis, and utilizing these logs for analysis depends on knowledge of an analyst.

In light of the foregoing, it is an object of the present invention to provide an incident event cause identification system and an incident event cause identification method which are capable of efficiently performing incident cause identification.

In order to solve the above problem, for example, the configurations set forth in claims are adopted.

The present application includes a plurality of means for solving the above problem, but as an example thereof, provided is an incident event cause identification system that includes a device log information holding unit that holds log information output from a target device, a causality graph holding unit that holds a causality graph in which a relationship between an incident event and a cause thereof is associated in advance, an incident detection processing unit that detects an incident event in the target device, a necessary log information determination processing unit that extracts the causality graph of an associated type for the incident event detected by the incident detection processing unit, and determines device log information necessary for cause identification based on the extracted causality graph, a necessary log information collection processing unit that collects the device log information determined by the necessary log information determination processing unit, a cause analysis processing unit that analyzes a cause of an incident event by using the device log information collected by the necessary log information collection processing unit and the causality graph, and an output unit that outputs the cause identified by the cause analysis processing unit or an analysis status.

According to the present invention, it is possible to extract only information necessary for an alert from among log information can be used in a device and identify a cause. Accordingly, a time for information scrutiny is reduced, and an information storage capacity is optimized, and thus it is possible to efficiently identify a cause of an incident.

Problems, configurations, and effects other than those described above will be clarified by the following description of embodiments.

### BRIEF DESCRIPTION OF DRAWINGS

FIG. 1 is a diagram illustrating an overall configuration example of an incident event cause identification system according to an embodiment of the present invention;
FIG. 2 is a block diagram illustrating a configuration example of a cause analysis device according to an embodiment of the present invention;
FIG. 3 is a flowchart illustrating an overall process example of the cause analysis device according to an embodiment of the present invention;
FIG. 4 is a flowchart illustrating a cause analysis process example according to an embodiment of the present invention;
FIG. 5 is a flowchart illustrating a cause likelihood score calculation process example according to an embodiment of the present invention;
FIG. 6 is a diagram illustrating a causality graph (an example of an attack cause) according to an embodiment of the present invention;
FIG. 7 is a diagram illustrating a causality graph (an example of a failure cause) according to an embodiment of the present invention;
FIG. 8 is a diagram illustrating an example of a log information table according to an embodiment of the present invention;
FIG. 9 is a diagram illustrating an example of a causality graph information table according to an embodiment of the present invention;
FIG. 10 is a diagram illustrating an example of a causality graph setting screen according to an embodiment of the present invention; and
FIG. 11 is a diagram illustrating an example of a cause analysis result presentation screen according to an embodiment of the present invention.

### DETAILED DESCRIPTION

Hereinafter, an incident event cause identification system and an incident event cause identification method according to an embodiment of the present invention (hereinafter, referred to as "the present example") will be described with reference to the accompanying drawings.

### [Overall Configuration of Incident Event Cause Identification System]

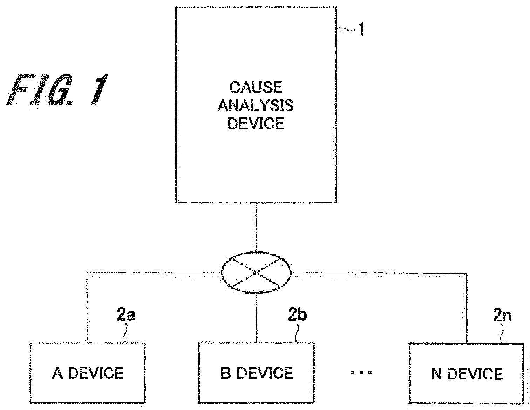

FIG. 1 illustrates an overall configuration example of an incident event cause identification system of the present example.

The incident event cause identification system of the present example is configured by connecting one or a plurality of target devices (A device 2a, B device 2b, ..., N device 2n: N is any integer) to a cause analysis device 1 via a network.

The cause analysis device 1 detects the occurrence of an incident in each of the devices 2a to 2n, collects device log information, and analyzes a cause.

### [Configuration of Cause Analysis Device]

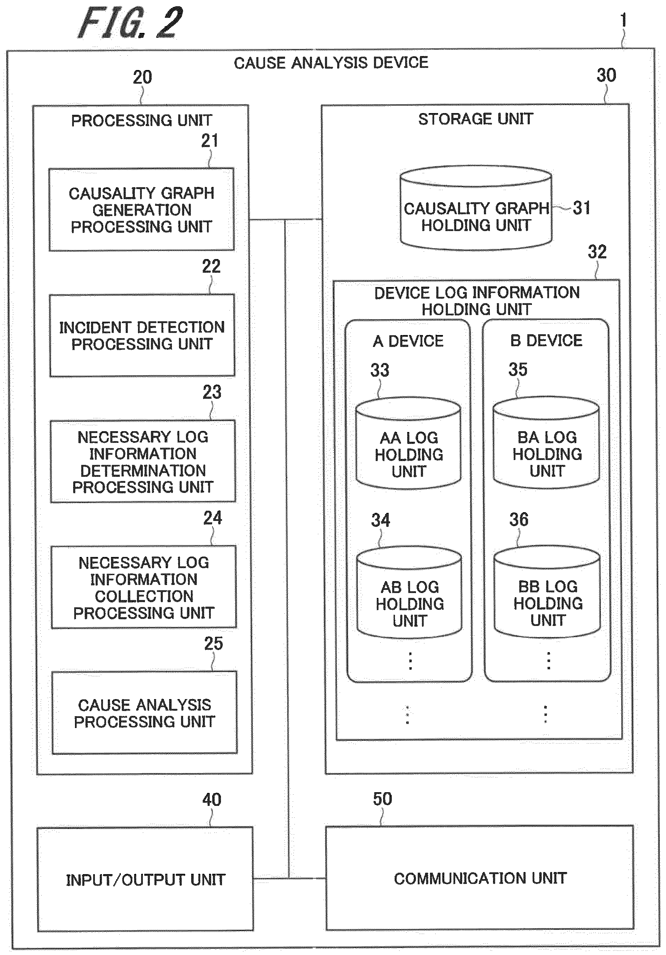

FIG. 2 illustrates a configuration example of the cause analysis device 1.

The cause analysis device 1 includes a processing unit 20, a storage unit 30, an input/output unit 40, and a communication unit 50.

The processing unit 20 includes a causality graph generation processing unit 21, an incident detection processing unit 22, a necessary log information determination processing unit 23, a necessary log information collection processing unit 24, and a cause analysis processing unit 25. Each of these processing units 21 to 25 is configured on a work memory (not illustrated) included in the processing unit 20 such that the processing unit 20 executes, for example, a program held by the processing unit 20 or the storage unit 30, that is, a program implementing an incident event cause identification method. The processing unit 20 includes, for example, an arithmetic device (computer) including a central processing unit (CPU) and the like.

The causality graph generation processing unit 21 performs a process of generating a causality graph regarding an incident that is information in which a relationship between an incident event and a cause thereof is associated. Although a specific example of the causality graph will be described later, the causality graph is created by a plurality of classifications for each detection node or each cause node that is an event indicating an attack or a failure. The classification here includes, for example, a failure occurrence likelihood related to a command, a failure occurrence likelihood related to device state checking, and the like.

Further, the causality graph may be created by an input from an input terminal by an analyst or a SOC-responsible personnel who monitors the incident in advance or may be automatically created by reading publicly known information summarizing causes of incidents.

Further, each cause node of the created causality graph and a determination condition thereof are changed, basically as a parameter tuning part, by the SOC-responsible personnel as needed. For example, the SOC-responsible personnel may add or correct the detection node or the cause node when a new threat is found.

The causality graph generated by the causality graph generation processing unit 21 is held in a causality graph holding unit 31 of the storage unit 30.

The incident detection processing unit 22 detects the occurrence of an incident in the target devices (A device 2a, B device 2b, ..., N device 2n). Information of the detected incident is transmitted to the necessary log information determination processing unit 23.

The necessary log information determination processing unit 23 acquires the causality graph associated with the type of the detected incident and determines a device log necessary for analysis.

The necessary log information collection processing unit 24 collects the device log necessary for the analysis of the incident from the target devices (A device 2a, B device 2b, ..., N device 2n).

The cause analysis processing unit 25 executes a cause analysis process by using the causality graph and the device log information.

The storage unit 30 includes a causality graph holding unit 31 and a device log information holding unit 32.

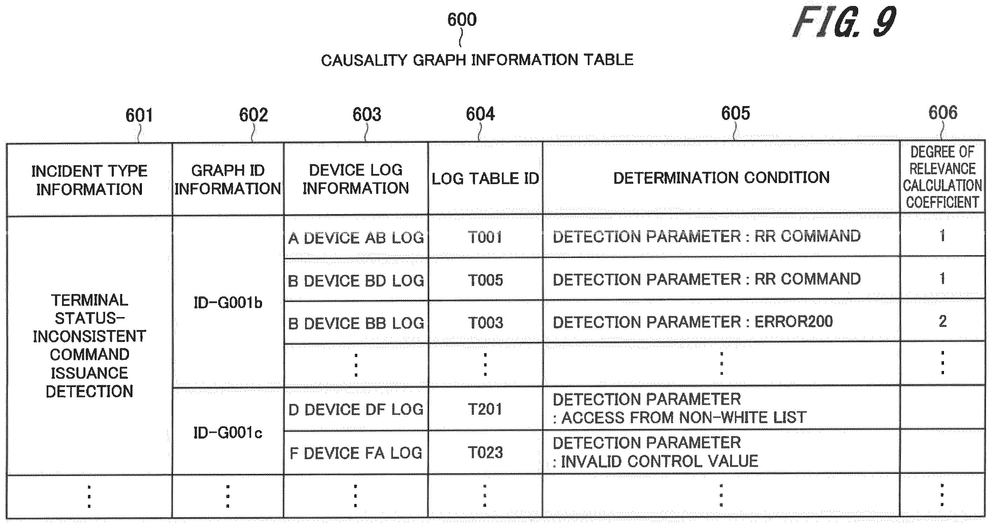

The causality graph holding unit 31 performs a causality graph holding process of holding the causality graph generated by the causality graph generation processing unit 21 as a causality table. The causality graph is generated in advance and held in the causality graph holding unit 31. An example of the causality table will be described later with reference to FIG. 9.

The device log information holding unit 32 performs a device log information holding process of classifying the log information of each target device for each type and holding the log information as a log information table. For example, the device log information holding unit 32 includes an AA log holding unit 33 that holds an AA log of the A device 2a and an AB log holding unit 34 that holds an AB log of the A device 2a.

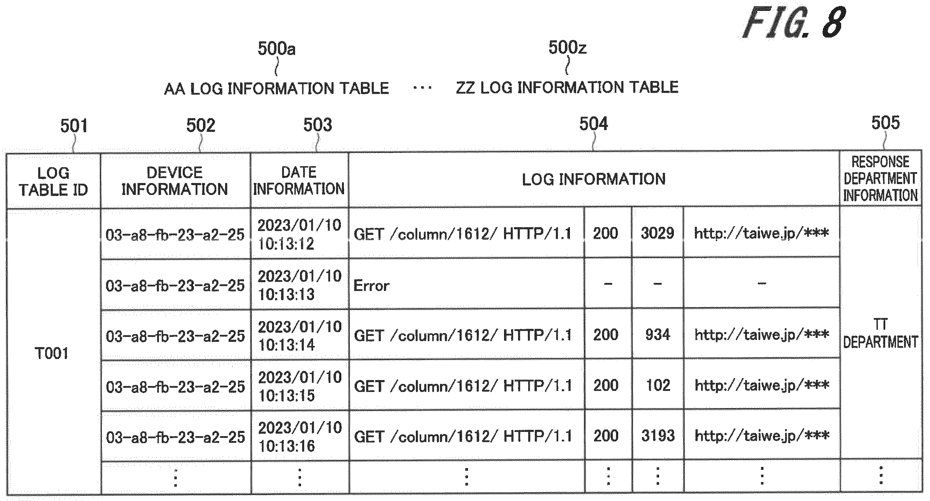

The device log information holding unit 32 includes a BA log holding unit 35 that holds a BA log of the B device 2a and a BB log holding unit 36 that holds a BB log of the A device 2a. The device log information holding unit 32 sequentially collects and holds the device log information. An example of the log information table will be described later with reference to FIG. 8.

The input/output unit 40 performs an output process of the analysis result in the cause analysis processing unit 25. Examples of the output process performed by the input/output unit 40 include a process of displaying an analysis result on a display. Further, the input/output unit 40 performs an input process of information necessary for analysis or the like.

The communication unit 50 performs communication with the cause analysis device 1 and the target device (A device 2a, B device 2b, ..., N device 2n). Further, the communication unit 50 performs a processing of transmitting the analysis result to other devices.

### [Overall Process Example of Cause Analysis Device]

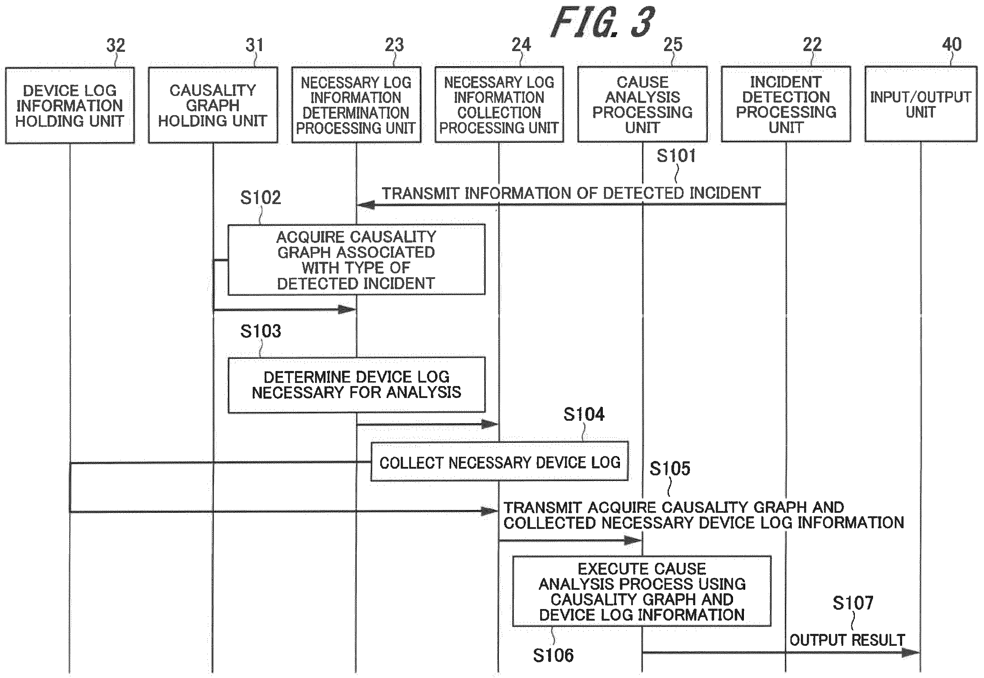

FIG. 3 is a flowchart illustrating a flow of the processes performed by the units of the cause analysis device 1.

First, the incident detection processing unit 22 detects the occurrence of an incident in the target device, and transmits information of the detected incident to the necessary log information determination processing unit 23 (step S101).

The necessary log information determination processing unit 23 that has received the information of the incident acquires the causality graph associated with the type of the detected incident from the causality graph holding unit 31 (step S102).

Then, the necessary log information determination processing unit 23 determines the device log necessary for the cause analysis from the information of the incident (step S103). After this determination, the necessary log information collection processing unit 24 collects necessary device log information from the device log information holding unit 32 (step S104). This collection process is a necessary log information collection process.

Thereafter, the necessary log information determination processing unit 23 transmits the acquired causality graph and the collected necessary device log information to the cause analysis processing unit 25 (step S105).

Then, the cause analysis processing unit 25 that has received these pieces of information performs the cause analysis process by using the received causality graph and device log information (step S106).

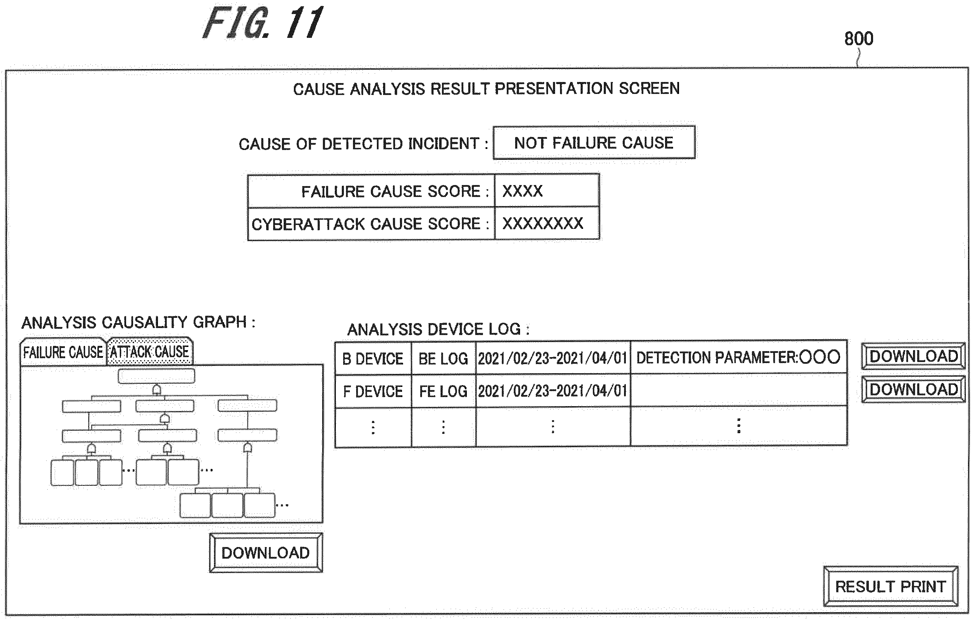

Then, the cause analysis processing unit 25 transmits an analysis process result for the incident cause to the input/output unit 40 (step S107). The input/output unit 40 executes the output process (display or the like) of the analysis process result for the incident cause. A display example of the analysis process result will be described later with reference to FIG. 11.

### [Details of Cause Analysis Process]

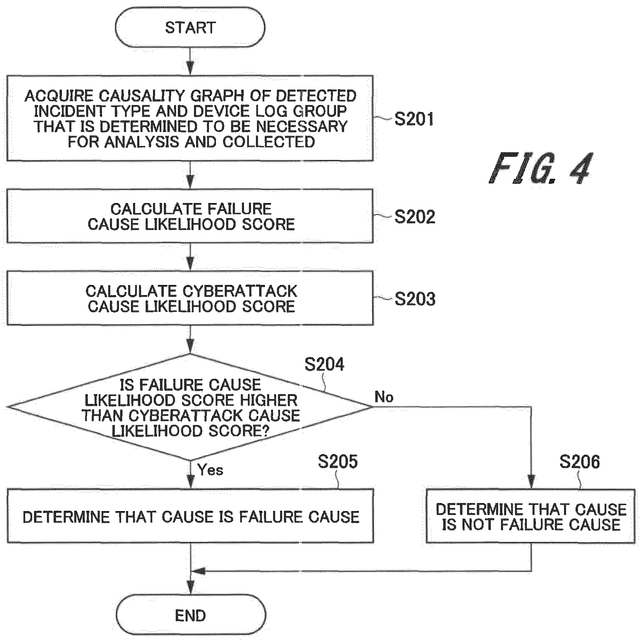

FIG. 4 is a flowchart illustrating details of the cause analysis process in the cause analysis processing unit 25.

The cause analysis processing unit 25 first acquires the causality graph of the detected incident type and the device log group that is determined to be necessary for analysis and collected (step S201).

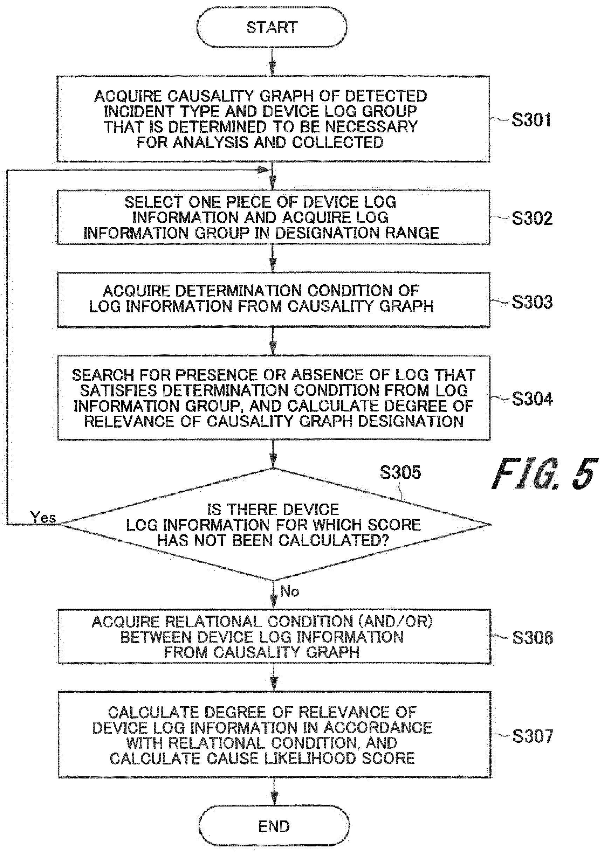

Then, the cause analysis processing unit 25 calculates a score of a failure cause likelihood of the device (step S202). Further, the cause analysis processing unit 25 calculates a score of a cyberattack cause likelihood (step S203). The details of these score calculation processes will be described later with reference to FIG. 5.

Then, the cause analysis processing unit 25 compares the failure cause likelihood score obtained in step S202 with the cyberattack cause likelihood score obtained in step S20. In this comparison, the cause analysis processing unit 25 determines whether or not the failure cause likelihood score is higher than the cyberattack cause likelihood score (step S204).

In a case in which the failure cause likelihood score is higher than the cyberattack cause likelihood score in the determination in step S204 (Yes in step S204), the cause analysis processing unit 25 determines that it is the failure-caused incident (step S205). On the other hand, in a case in which the failure cause likelihood score is not higher than the cyberattack cause likelihood score in the determination in step S204 (No in step S204), the cause analysis processing unit 25 determines that the incident is not caused by the failure (step S206).

FIG. 5 is a flowchart illustrating the details of the calculation of the score of the failure cause likelihood of the device (step S202 in FIG. 4) and the calculation of the score of the cyberattack cause likelihood (step S203 in FIG. 4). The calculation of the score of the failure cause likelihood of the device and the calculation of the score of the cyberattack cause likelihood are executed through the same processing procedure.

The cause analysis processing unit 25 first acquires the causality graph of the detected incident type and the device log group that is determined to be necessary for analysis and collected (step S301).

Then, the cause analysis processing unit 25 selects one piece of device log information from the collected device log group and acquires the log information group in a designation range (step S302). A range (designation range) for acquiring the log information group is designated in advance. Alternatively, the designation range may be designated each time a work is performed.

Further, the cause analysis processing unit 25 acquires a determination condition of the log information from the acquired causality graph (step S303). Thereafter, the cause analysis processing unit 25 searches for the presence or absence of a log that satisfies the determination condition from the log information group, and calculates the degree of relevance of the causality graph designation (step S304).

When the degree of relevance calculation of step S304 is performed, the cause analysis processing unit 25 determines whether there is device log information for which a score has not been calculated (step S305). In a case in which it is determined in step S305 that there is device log information for which a score has not been calculated (Yes in step S305), the cause analysis processing unit 25 returns to step S302 and performs the process for other device log information.

In a case in which it is determined in step S305 that there is no device log information for which a score has not been calculated (No in step S305), the cause analysis processing unit 25 acquires a relational condition (AND/OR) between the device log information from the causality graph (step S306).

Then, the cause analysis processing unit 25 calculates the degree of relevance of the device log information in accordance with the acquired relational condition, and calculates the cause likelihood score (step S307). Here, the cause likelihood score includes the failure cause likelihood score and the cyberattack cause likelihood score. In the method of calculating the score here, for example, as a method of calculating the relational condition between the device log information, in the case of the AND condition, the minimum value of each degree of relevance is taken as the score. Further, in the case of the OR condition, the maximum value of each degree of relevance is taken as a score.

### [Example of Causality Graph]

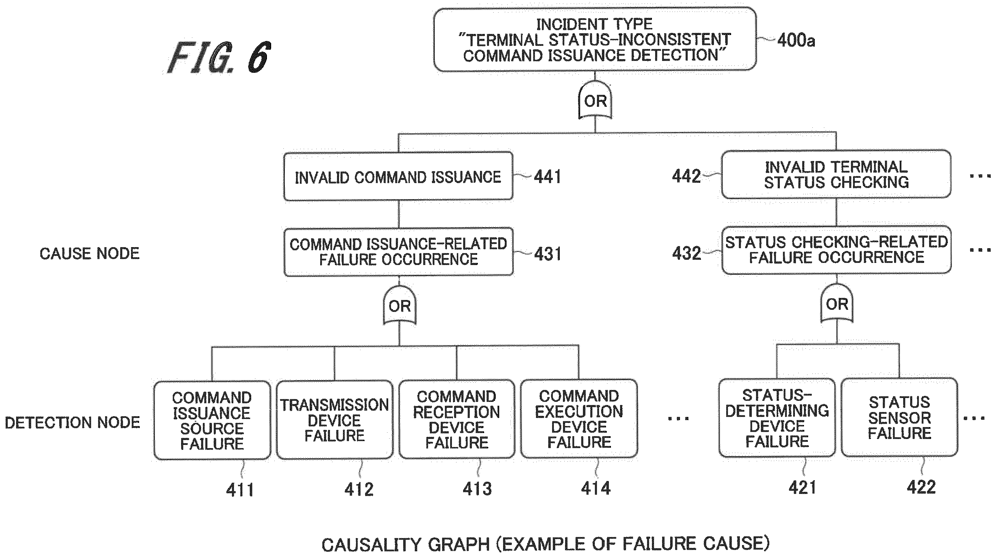

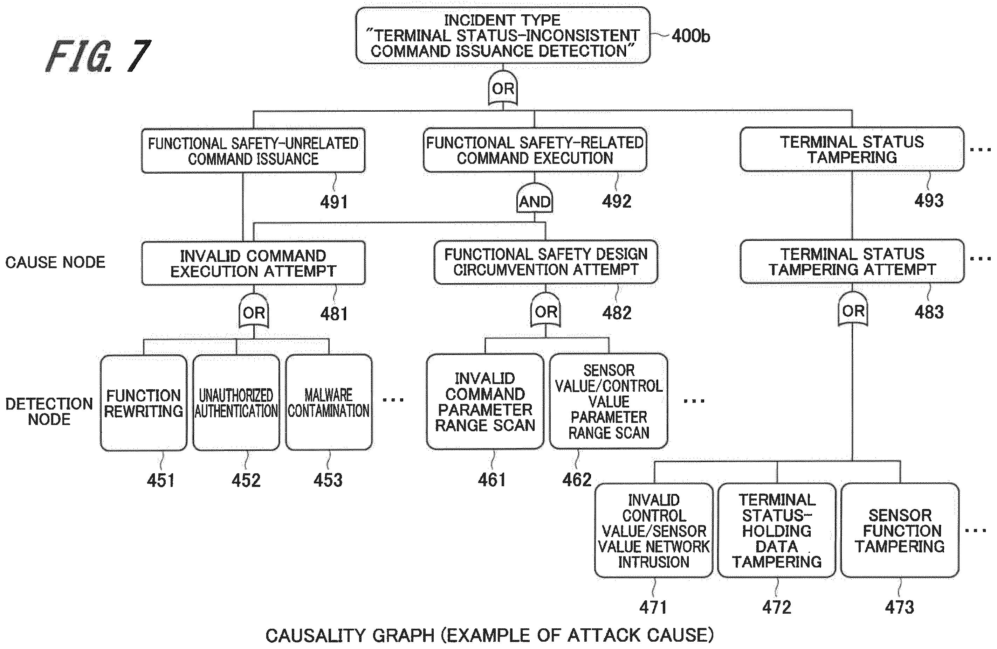

FIGS. 6 and 7 show examples of the causality graphs. FIG. 6 is a causality graph of the failure cause, and FIG. 7 is a causality graph of the cyberattack cause.

In the causality graph of the failure cause illustrated in FIG. 6, a failure 411 of a command issuance source, a transmission device failure 412, a command reception device failure 413, a command execution device failure 414, ..., are included as the detection node of one type of the incident. By the OR condition of these events, command issuance-related failure occurrence 431 is obtained as the cause node, and invalid command issuance 441 is registered as an upper node.

Further, as illustrated in FIG. 6, a status-determining device failure 421, a status sensor failure 422, ..., and the like are included as another type of detection node of the incident. By the OR condition of these failure events, status checking-related failure occurrence 432 is obtained as the cause node, and invalid terminal status checking 442 is registered as an upper node.

Further, an incident type "terminal status-inconsistent command issuance detection" 400a is registered in the causality graph by the OR condition of the invalid command issuance 441 and the invalid terminal status checking 442.

In the causality graph of the cyberattack cause illustrated in FIG. 7, function rewriting 451, unauthorized authentication 452, malware contamination 453, ..., and the like are included as the detection node of one type of the incident. By the OR condition of these types of events, an invalid command execution attempt 481 is obtained as the cause node.

Further, an invalid command parameter range scan function 461, a sensor value/control value parameter range scan 462, ..., and the like are included as the detection node of another type of incident.

By the OR condition of these types of events, a functional safety design circumvention attempt 482 is obtained as the cause node.

Then, functional safety-unrelated command issuance 491 is obtained as an upper node of the cause node of the invalid command execution attempt 481.

Alternatively, functional safety-related command execution 492 is obtained by the AND condition of the invalid command execution attempt 481 and the functional safety design circumvention attempt 482.

Further, invalid control value/sensor value network (NW) intrusion 471, terminal status-holding data tampering 472, sensor function tampering 473, ..., and the like are included as the detection node of still another type of incident. By the OR condition of these types of events, terminal status tampering attempt 483 is obtained as the cause node, and terminal status tampering 493 is further obtained as an upper node of the cause node.

Further, an incident type "terminal status-inconsistent command issuance detection" 400b is registered in the causality graph by the OR condition of the functional safety-unrelated command issuance 491, the functional safety-related command execution 492, and terminal status tampering 493.

### [Example of Log Information Table]

FIG. 8 illustrates an example of the log information table held by the device log information holding unit 32.

The log information table is generated for each of the log information holding units 33, 34, 35, and 36 illustrated in FIG. 2, and includes any number of AA log information tables 500a to ZZ log information tables 500z.

As illustrated in FIG. 8, one log information table includes a log information table ID 501, device information 502, date information 503, log information 504, and response department information 505.

The log information table ID 501 is an identification number assigned to each log information table.

The device information 502 is an address of the target device serving as a collection source of the device log information.

The date information 503 is a date and time when the device log information is collected.

The log information 504 is actually collected device log information.

The response department information 505 is information of a department capable of performing determination on the associated device log information.

As the response department information 505 capable of performing the determination is associated and held as described above, it is possible to determine the incident in detail in the associated department. For example, when the cause is a failure, information of the department capable of performing determination on the failure is recorded, and thus the failure can be handled.

### [Example of Causality Graph Information Table]

FIG. 9 illustrates an example of the causality graph information table 600 held by the causality graph holding unit 31.

The causality graph information table 600 includes incident type information 601, a graph ID 602, device log information 603, a log table ID 604, a determination condition 605, and a degree of relevance calculation coefficient 606.

The incident type information 601 is an incident type. For example, as illustrated in FIG. 9, the incident type "terminal status-inconsistent command issuance detection" or the like is stored.

The graph ID 602 is an identification number assigned to each causality graph.

The device log information 603 is device log information of a determination source of the causality. For example, it is information such as an A device AB log.

The log table ID 604 is a log table ID holding the device log information indicated by the device log information 603.

The determination condition 605 indicates a detection parameter necessary for determination.

The degree of relevance calculation coefficient 606 indicates a coefficient value for calculating the degree of relevance.

The causality graph illustrated in FIGS. 6 and 7 is generated on the basis of the information of the causality graph information table 600.

### [Example of Setting screen of Causality Graph]

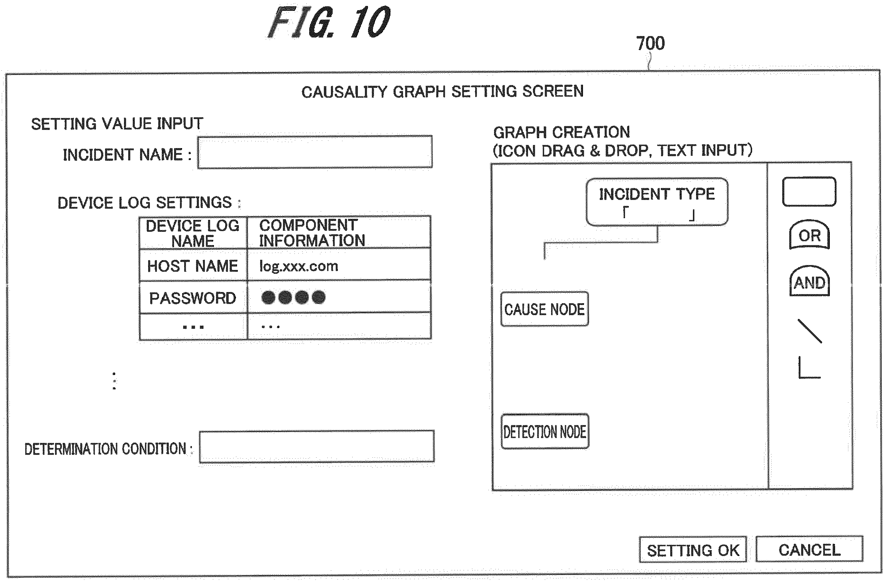

FIG. 10 illustrates an example of a causality graph setting screen 700 displayed on the display unit constituting the input/output unit 40 of the cause analysis device 1 when the causality graph is generated by the causality graph generation processing unit 21.

As illustrated on the left side of the screen, the causality graph setting screen 700 includes an input field of an incident name, the details of device log settings, and an input field of a determination condition as setting value inputs, and a responsible personnel (analyst) working on the setting screen 700 can input these details.

Further, as illustrated on the right side of the causality graph setting screen 700, a field in which the responsible personnel creates a graph is prepared, and the responsible personnel working on the setting screen 700 can input the details of the detection node, the details of the cause node, and the details of the incident type. Then, the responsible personnel can create the causality graph illustrated in FIGS. 6 and 7 by inputting the determination conditions (the AND condition, the OR condition, and the like) of these nodes and a connection line indicating a connection relationship of each node.

On the lower right of the causality graph setting screen 700, there are a "setting OK" button and a "cancel" button, and when the responsible personnel selects the "setting OK" button, the causality graph created on the causality graph setting screen 700 is held in the causality graph holding unit 31.

Further, when the responsible personnel selects the "cancel" button, the creation of the causality graph created on the causality graph setting screen 700 is canceled.

### [Example of Cause Analysis Result Presentation Screen]

FIG. 11 illustrates an example in which a cause analysis result screen 800 of the cause analysis processing unit 25 is displayed on the display unit constituting the input/output unit 40.

The cause analysis result screen 800 includes a display field of a cause of a detected incident, a display field of a failure cause score, and a display field of a cyberattack cause score. Each score is a score obtained when the cause analysis process is performed in the cause analysis processing unit 25, and the cause of the detected incident (the failure cause or the cyberattack cause) is displayed in the display field of the cause of the detected incident on the basis of the determination of step S204 of the flowchart of FIG. 4 with the values of both scores.

Further, in the cause analysis result screen 800, the analysis causality graph (the lower left in FIG. 11) used for the analysis and a list of analyzed device logs (the lower right in FIG. 11) are displayed. Further, in FIG. 11, the texts in the analysis causality graph are omitted, but the details of the analysis causality graph are actually displayed in the form illustrated in FIGS. 6 and 7.

Download buttons are displayed at portions in which the analysis causality graph and the list of device logs are displayed. The responsible personnel can download the details of the analysis causality graph (for example, the information illustrated in FIG. 9) and download the details of the device logs (for example, the information illustrated in FIG. 8), and then cause the details to be displayed on the screen.

Further, a result print button is provided on the cause analysis result screen 800, and the cause analysis result can be printed by the operation of the responsible personnel.

As described above, according to the incident event cause identification system of the present example, it is possible to extract only information necessary for the alert from among various types of log information that can be used in the device and identify the cause. Accordingly, a time for information scrutiny is reduced, and an information storage capacity is optimized, and thus it is possible to efficiently identify a cause of an incident. Further, it is possible to appropriately identify the cause without being affected by the skill of the responsible personnel (analyst).

Here, the cause analysis processing unit 25 calculates the failure cause likelihood score and the attack cause likelihood score by using the device log information collected by the necessary log information determination processing unit 23 and the prepared causality graph, and identifies the cause of the incident event. Accordingly, it is possible to appropriately determine whether the cause of the incident event is the failure cause or the cyberattack cause.

Specifically, the cause analysis processing unit 25 determines that it is not the failure cause when the attack cause likelihood score is higher than the failure cause likelihood score, and determines that it is the failure cause when the attack cause likelihood score is not higher than the failure cause likelihood score. Accordingly, it is possible to appropriately determine the cause from the score values.

Further, when the failure cause likelihood score and the attack cause likelihood score are calculated, as described with reference to the flowchart of FIG. 5, the cause analysis processing unit 25 acquires the determination condition of the device log information from the causality graph of the detected incident type, searches for the presence or absence of a log satisfying the determination condition from the device log group that is determined to be necessary for analysis and collected, and calculates the degree of relevance of the causality graph designation. Accordingly, it is possible to appropriately calculate each score on the basis of the degree of relevance of the causality graph designation, thereby improving the cause determination accuracy.

Further, as described with reference to FIG. 8, the causality graph has the information of the department capable of performing the determination is associated and held, and thus the department that handles the associated incident can make a determination, whereby the incident can be quickly handled.

Further, the causality graph generation processing unit 21 that generates the causality graph held by the causality graph holding unit 31 is provided, and the generated causality graph is held by the causality graph holding unit 31, and thus it is possible to easily create or revise the causality graph.

Furthermore, an appropriate causality graph can be created such that the causality graph is created in the causality graph setting screen 700 illustrated in FIG. 10 by the analyst or the SOC-responsible personnel or is automatically created by reading publicly known information summarizing the causes of the incidents.

Furthermore, the input/output unit 40 outputs the causality graph and the necessary log information as an analysis status as illustrated in FIG. 11, and thus the details of the cause determination reason can be understood.

### [Modified Example]

Note that the embodiment described so far has been described in detail to elucidate the present invention and is not limited to configurations including all the components described above necessarily.

For example, in the above-described embodiment, the cause analysis processing unit 25 performs the cause determination, and outputs, as the cause analysis result, the determination result. On the other hand, the cause analysis processing unit 25 may choose not to perform the cause determination but instead perform the calculation of the failure cause likelihood score and the attack cause likelihood score and display the scores. The responsible personnel (analyst) who has checked this display can estimate the cause from the scores.

Further, in the configuration diagram of the cause analysis device 1 illustrated in FIG. 2, only control lines or information lines considered to be necessary for description are illustrated, and not all control lines or information lines on a product are necessarily illustrated. In practice, almost all the configurations may be considered to be connected to each other.

Further, the flows of the processes illustrated in the flowcharts illustrated in FIGS. 3 to 5 are also an example, and as long as the process results are the same, the process order may be partially changed, or a plurality of processes may be simultaneously executed.

The display examples illustrated in FIGS. 10 and 11 are also examples, and the present invention is not limited to these displays.

Further, the cause analysis device 1 illustrated in FIG. 2 including the processing unit 20 which is a computer on which a program (a program implementing the incident event cause identification method) is installed is also an example, and it may be implemented by the cause analysis device 1 and other configurations.

For example, the whole or part of the cause analysis device 1 may be implemented by dedicated hardware such as a field programmable gate array (FPGA) or an application specific integrated circuit (ASIC).

Further, some components of the cause analysis device 1 may be disposed in other processing devices such as a server connected via a network, and an analysis process similar to that of the cause analysis device 1 may be performed by exchanging data among a plurality of processing devices.

Furthermore, the program executing the incident event cause identification method may be prepared in a storage device in the computer, or may be installed in a recording medium such as an external memory, an IC card, an SD card, or an optical disk and transferred.

## Claims

1. An incident event cause identification system, comprising:
a device log information holding unit (32) that holds log information output from a target device (A);
a causality graph holding unit (31) that holds a causality graph in which a relationship between an incident event and a cause thereof is associated in advance;
an incident detection processing unit (22) that detects an incident event in the target device (A);
a necessary log information determination processing unit (23) that extracts the causality graph of an associated type for the incident event detected by the incident detection processing unit (22), and determines device log information necessary for cause identification based on the extracted causality graph;
a necessary log information collection processing unit (24) that collects the device log information determined by the necessary log information determination processing unit (23);
a cause analysis processing unit (25) that analyzes a cause of an incident event by using the device log information collected by the necessary log information collection processing unit (24) and the causality graph; and
an output unit (40) that outputs the cause identified by the cause analysis processing unit or an analysis status, the incident event cause identification system being further **characterized in that**
the cause analysis processing unit (25) calculates a failure cause likelihood score and an attack cause likelihood score by using the device log information collected by the necessary log information determination processing unit (23) and the causality graph, and identifies the cause of the incident event, wherein
the cause analysis processing unit (25) acquires a determination condition for the device log information from a causality graph of a detected incident type when the failure cause likelihood score and the attack cause likelihood score are calculated, wherein the determination condition indicates a detection parameter necessary for determination of a pre-defined cause for the incident event, searches for the presence or absence of a log satisfying the determination condition from a device log group that is determined to be necessary for analysis and collected, and calculates the degree of relevance of causality graph designation, and
wherein
the cause analysis processing unit (25) determines that the cause is not the failure cause when the attack cause likelihood score is higher than the failure cause likelihood score, and determines that the cause is the failure cause when the attack cause likelihood score is not higher than the failure cause likelihood score.

2. The incident event cause identification system according to claim 1, wherein
the causality graph associates and holds information of a department capable of performing determination.

3. The incident event cause identification system according to claim 1, further comprising,
a causality graph generation processing unit (21) that generates the causality graph held by the causality graph holding unit (31), wherein the generated causality graph is held by the causality graph holding unit (31).

4. The incident event cause identification system according to claim 1, wherein
the output unit (40) outputs the causality graph and necessary log information as the analysis status.

5. An incident event cause identification method, comprising:
a device log information holding process of holding log information output from a target device;
a causality graph holding process of holding a causality graph in which a relationship between an incident event and a cause thereof is associated in advance;
an incident detection process of detecting an incident event in the target device;
a necessary log information determination process of extracting the causality graph of an associated type for the incident event detected by the incident detection process (S301), and determining device log information necessary for cause identification based on the extracted causality graph;
a necessary log information collection process of collecting the device log information determined by the necessary log information determination process (S302);
a cause analysis process of analyzing a cause of an incident event by using the device log information collected by the necessary log information collection process and the causality graph; and
an output process of outputting the cause identified by the cause analysis process or an analysis status,
the incident event cause identification method being further **characterized in that**
in the cause analysis process, a failure cause likelihood score and an attack cause likelihood score are calculated by using the device log information collected in the necessary log information determination process and the causality graph, and the cause of the incident event is identified, wherein
in the cause analysis process a determination condition for the device log information from a causality graph of a detected incident type is acquired when the failure cause likelihood score and the attack cause likelihood score are calculated (S303), wherein the determination condition indicates a detection parameter necessary for determination of a pre-defined cause for the incident event, the presence or absence of a log satisfying the determination condition from a device log group that is determined to be necessary for analysis and collected is sought, and the degree of relevance of causality graph designation is calculated (S304), and
wherein
in the cause analysis process, it is determined that the cause is not the failure cause when the attack cause likelihood score is higher than the failure cause likelihood score (S204), and it is determined that the cause is the failure cause when the attack cause likelihood score is not higher than the failure cause likelihood score (S205).

## Patentansprüche

1. System zur Identifizierung einer Ursache eines Vorfalls, umfassend:
eine Einheit (32) zum Halten von Geräteprotokollinformationen, die von einem Zielgerät (A) ausgegebene Protokollinformationen hält;
eine Einheit (31) zum Halten eines Kausalitätsgraphen, die einen Kausalitätsgraphen hält, in dem eine Beziehung zwischen einem Vorfall und einer Ursache davon im Voraus zugeordnet ist;
eine Vorfall-Detektionsverarbeitungseinheit (22), die ein Vorfall in dem Zielgerät (A) detektiert;
eine Verarbeitungseinheit (23) zum Bestimmen von notwendigen Protokollinformationen, die den Kausalitätsgraphen eines zugeordneten Typs für das durch die Vorfall-Detektionsverarbeitungseinheit (22) detektierte Vorfall extrahiert und Geräteprotokollinformationen, die für eine Ursachenidentifizierung notwendig sind, basierend auf dem extrahierten Kausalitätsgraphen bestimmt;
eine Verarbeitungseinheit (24) zum Sammeln von notwendigen Protokollinformationen, die die durch die Verarbeitungseinheit (23) zum Bestimmen von notwendigen Protokollinformationen bestimmten Geräteprotokollinformationen sammelt;
eine Ursachenanalyse-Verarbeitungseinheit (25), die eine Ursache eines Vorfalls unter Verwendung der durch die Verarbeitungseinheit (24) zum Sammeln von notwendigen Protokollinformationen gesammelten Geräteprotokollinformationen und des Kausalitätsgraphen analysiert; und
eine Ausgabeeinheit (40), die die durch die Ursachenanalyse-Verarbeitungseinheit identifizierte Ursache oder einen Analysestatus ausgibt, wobei das System zur Identifizierung einer Ursache eines Vorfalls ferner **dadurch gekennzeichnet ist, dass**
die Ursachenanalyse-Verarbeitungseinheit (25) eine Fehlerursachen-Wahrscheinlichkeitsbewertung und eine Angriffsursachen-Wahrscheinlichkeitsbewertung unter Verwendung der durch die Verarbeitungseinheit (23) zum Bestimmen von notwendigen Protokollinformationen gesammelten Geräteprotokollinformationen und des Kausalitätsgraphen berechnet und die Ursache des Vorfalls identifiziert, wobei
die Ursachenanalyse-Verarbeitungseinheit (25) eine Bestimmungsbedingung für die Geräteprotokollinformationen aus einem Kausalitätsgraphen eines detektierten Vorfalls erfasst, wenn die Fehlerursachen-Wahrscheinlichkeitsbewertung und die Angriffsursachen-Wahrscheinlichkeitsbewertung berechnet werden, wobei die Bestimmungsbedingung einen Detektionsparameter angibt, der für die Bestimmung einer vordefinierten Ursache für das Vorfall notwendig ist, nach dem Vorhandensein oder Fehlen eines Protokolls, das die Bestimmungsbedingung erfüllt, aus einer Geräteprotokollgruppe sucht, die als für die Analyse notwendig bestimmt und gesammelt wird, und den Grad der Relevanz der Kausalitätsgraphenbezeichnung berechnet, und
wobei
die Ursachenanalyse-Verarbeitungseinheit (25) bestimmt, dass die Ursache nicht die Fehlerursache ist, wenn die Angriffsursachen-Wahrscheinlichkeitsbewertung höher als die Fehlerursachen-Wahrscheinlichkeitsbewertung ist, und bestimmt, dass die Ursache die Fehlerursache ist, wenn die Angriffsursachen-Wahrscheinlichkeitsbewertung nicht höher als die Fehlerursachen-Wahrscheinlichkeitsbewertung ist.

2. Vorfallereignisursachen-Identifikationssystem nach Anspruch 1, wobei
der Kausalitätsgraph Informationen einer Abteilung, die in der Lage ist, eine Bestimmung durchzuführen, zuordnet und hält.

3. Vorfallereignisursachen-Identifikationssystem nach Anspruch 1, ferner umfassend,
eine Kausalitätsgraphen-Erzeugungsverarbeitungseinheit (21), die den von der Kausalitätsgraphen-Halteeinheit (31) gehaltenen Kausalitätsgraphen erzeugt, wobei der erzeugte Kausalitätsgraph von der Kausalitätsgraphen-Halteeinheit (31) gehalten wird.

4. Vorfallereignisursachen-Identifikationssystem nach Anspruch 1, wobei
die Ausgabeeinheit (40) den Kausalitätsgraphen und notwendige Protokollinformationen als den Analysestatus ausgibt.

5. Verfahren zur Identifizierung einer Ursache eines Vorfalls, umfassend:
einen Geräteprotokollinformationen-Halteprozess zum Halten von von einem Zielgerät ausgegebenen Protokollinformationen;
einen Kausalitätsgraphen-Halteprozess zum Halten eines Kausalitätsgraphen, in dem eine Beziehung zwischen einem Vorfall und einer Ursache davon im Voraus zugeordnet ist;
einen Vorfall-Detektionsprozess zum Detektieren eines Vorfalls in dem Zielgerät;
einen Prozess zum Bestimmen von notwendigen Protokollinformationen zum Extrahieren des Kausalitätsgraphen eines zugeordneten Typs für das durch den Vorfall-Detektionsprozess detektierte Vorfall (S301) und Bestimmen von Geräteprotokollinformationen, die für eine Ursachenidentifizierung notwendig sind, basierend auf dem extrahierten Kausalitätsgraphen;
einen Prozess zum Sammeln von notwendigen Protokollinformationen zum Sammeln der durch den Prozess (S302) zum Bestimmen von notwendigen Protokollinformationen bestimmten Geräteprotokollinformationen;
einen Ursachenanalyseprozess zum Analysieren einer Ursache eines Vorfalls unter Verwendung der durch den Prozess zum Sammeln von notwendigen Protokollinformationen gesammelten Geräteprotokollinformationen und des Kausalitätsgraphen; und
einen Ausgabeprozess zum Ausgeben der durch den Ursachenanalyseprozess identifizierten Ursache oder eines Analysestatus,
wobei das Verfahren zur Identifizierung einer Ursache eines Vorfalls ferner **dadurch gekennzeichnet ist, dass**
in dem Ursachenanalyseprozess eine Fehlerursachen-Wahrscheinlichkeitsbewertung und eine Angriffsursachen-Wahrscheinlichkeitsbewertung unter Verwendung der in dem Prozess zum Bestimmen von notwendigen Protokollinformationen gesammelten Geräteprotokollinformationen und des Kausalitätsgraphen berechnet werden und die Ursache des Vorfalls identifiziert wird, wobei
in dem Ursachenanalyseprozess eine Bestimmungsbedingung für die Geräteprotokollinformationen aus einem Kausalitätsgraphen eines detektierten Vorfalls erfasst wird, wenn die Fehlerursachen-Wahrscheinlichkeitsbewertung und die Angriffsursachen-Wahrscheinlichkeitsbewertung berechnet werden (S303), wobei die Bestimmungsbedingung einen Detektionsparameter angibt, der für die Bestimmung einer vordefinierten Ursache für das Vorfall notwendig ist, das Vorhandensein oder Fehlen eines Protokolls, das die Bestimmungsbedingung erfüllt, aus einer Geräteprotokollgruppe gesucht wird, die als für die Analyse notwendig bestimmt und gesammelt wird, und der Grad der Relevanz der Kausalitätsgraphenbezeichnung berechnet wird (S304), und
wobei
in dem Ursachenanalyseprozess bestimmt wird, dass die Ursache nicht die Fehlerursache ist, wenn die Angriffsursachen-Wahrscheinlichkeitsbewertung höher als die Fehlerursachen-Wahrscheinlichkeitsbewertung ist (S204), und bestimmt wird, dass die Ursache die Fehlerursache ist, wenn die Angriffsursachen-Wahrscheinlichkeitsbewertung nicht höher als die Fehlerursachen-Wahrscheinlichkeitsbewertung ist (S205).

## Revendications

1. Système d'identification de cause d'événement incident, comprenant :
une unité de conservation d'informations de journal de dispositif (32) qui conserve des informations de journal délivrées en sortie à partir d'un dispositif cible (A) ;
une unité de conservation de graphe de causalité (31) qui conserve un graphe de causalité dans lequel une relation entre un événement incident et une cause de celui-ci est associée à l'avance ;
une unité de traitement de détection d'incident (22) qui détecte un événement incident dans le dispositif cible (A) ;
une unité de traitement de détermination d'informations de journal nécessaires (23) qui extrait le graphe de causalité d'un type associé pour l'événement incident détecté par l'unité de traitement de détection d'incident (22), et détermine des informations de journal de dispositif nécessaires pour une identification de cause sur la base du graphe de causalité extrait ;
une unité de traitement de collecte d'informations de journal nécessaires (24) qui collecte les informations de journal de dispositif déterminées par l'unité de traitement de détermination d'informations de journal nécessaires (23) ;
une unité de traitement d'analyse de cause (25) qui analyse une cause d'un événement incident en utilisant les informations de journal de dispositif collectées par l'unité de traitement de collecte d'informations de journal nécessaires (24) et le graphe de causalité ; et
une unité de sortie (40) qui délivre en sortie la cause identifiée par l'unité de traitement d'analyse de cause ou un état d'analyse, le système d'identification de cause d'événement incident étant en outre **caractérisé en ce que**
l'unité de traitement d'analyse de cause (25) calcule un score de probabilité de cause de défaillance et un score de probabilité de cause d'attaque en utilisant les informations de journal de dispositif collectées par l'unité de traitement de détermination d'informations de journal nécessaires (23) et le graphe de causalité, et identifie la cause de l'événement incident, dans lequel
l'unité de traitement d'analyse de cause (25) acquiert une condition de détermination pour les informations de journal de dispositif à partir d'un graphe de causalité d'un type incident détecté lorsque le score de probabilité de cause de défaillance et le score de probabilité de cause d'attaque sont calculés, dans lequel la condition de détermination indique un paramètre de détection nécessaire pour la détermination d'une cause prédéfinie pour l'événement incident, recherche la présence ou l'absence d'un journal satisfaisant la condition de détermination à partir d'un groupe de journal de dispositif qui est déterminé comme étant nécessaire pour l'analyse et collecté, et calcule le degré de pertinence de désignation de graphe de causalité, et
dans lequel
l'unité de traitement d'analyse de cause (25) détermine que la cause n'est pas la cause de défaillance lorsque le score de probabilité de cause d'attaque est supérieur au score de probabilité de cause de défaillance, et détermine que la cause est la cause de défaillance lorsque le score de probabilité de cause d'attaque n'est pas supérieur au score de probabilité de cause de défaillance.

2. Système d'identification de cause d'événement incident selon la revendication 1, dans lequel
le graphe de causalité associe et conserve des informations d'un département capable d'effectuer une détermination.

3. Système d'identification de cause d'événement incident selon la revendication 1, comprenant en outre,
une unité de traitement de génération de graphe de causalité (21) qui génère le graphe de causalité conservé par l'unité de conservation de graphe de causalité (31), dans lequel le graphe de causalité généré est conservé par l'unité de conservation de graphe de causalité (31).

4. Système d'identification de cause d'événement incident selon la revendication 1, dans lequel
l'unité de sortie (40) délivre en sortie le graphe de causalité et des informations de journal nécessaires en tant qu'état d'analyse.

5. Procédé d'identification de cause d'événement incident, comprenant :
un processus de conservation d'informations de journal de dispositif consistant à conserver des informations de journal délivrées en sortie à partir d'un dispositif cible ;
un processus de conservation de graphe de causalité consistant à conserver un graphe de causalité dans lequel une relation entre un événement incident et une cause de celui-ci est associée à l'avance ;
un processus de détection d'incident consistant à détecter un événement incident dans le dispositif cible ;
un processus de détermination d'informations de journal nécessaires consistant à extraire le graphe de causalité d'un type associé pour l'événement incident détecté par le processus de détection d'incident (S301), et à déterminer des informations de journal de dispositif nécessaires pour une identification de cause sur la base du graphe de causalité extrait ;
un processus de collecte d'informations de journal nécessaires consistant à collecter les informations de journal de dispositif déterminées par le processus de détermination d'informations de journal nécessaires (S302) ;
un processus d'analyse de cause consistant à analyser une cause d'un événement incident en utilisant les informations de journal de dispositif collectées par le processus de collecte d'informations de journal nécessaires et le graphe de causalité ; et
un processus de sortie consistant à délivrer en sortie la cause identifiée par le processus d'analyse de cause ou un état d'analyse,
le procédé d'identification de cause d'événement incident étant en outre **caractérisé en ce que**
dans le processus d'analyse de cause, un score de probabilité de cause de défaillance et un score de probabilité de cause d'attaque sont calculés en utilisant les informations de journal de dispositif collectées dans le processus de détermination d'informations de journal nécessaires et le graphe de causalité, et la cause de l'événement incident est identifiée, dans lequel
dans le processus d'analyse de cause, une condition de détermination pour les informations de journal de dispositif à partir d'un graphe de causalité d'un type incident détecté est acquise lorsque le score de probabilité de cause de défaillance et le score de probabilité de cause d'attaque sont calculés (S303), dans lequel la condition de détermination indique un paramètre de détection nécessaire pour la détermination d'une cause prédéfinie pour l'événement incident, la présence ou l'absence d'un journal satisfaisant la condition de détermination à partir d'un groupe de journal de dispositif qui est déterminé comme étant nécessaire pour l'analyse et collecté est recherchée, et le degré de pertinence de désignation de graphe de causalité est calculé (S304), et
dans lequel
dans le processus d'analyse de cause, il est déterminé que la cause n'est pas la cause de défaillance lorsque le score de probabilité de cause d'attaque est supérieur au score de probabilité de cause de défaillance (S204), et il est déterminé que la cause est la cause de défaillance lorsque le score de probabilité de cause d'attaque n'est pas supérieur au score de probabilité de cause de défaillance (S205).
